# EUROPEAN PATENT SPECIFICATION

(11) **EP 2 701 530 B1**
(45) Date of publication and mention of the grant of the patent: **16.01.2019**
(21) Application number: 12719039.5
(22) Date of filing: 25.04.2012
(51) Int. Cl.: A23G 1/00, A23G 1/32

(54) **TEMPERATURE TOLERANT CHOCOLATE**
TEMPERATURTOLERANTE SCHOKOLADE
CHOCOLAT TOLÉRANT À LA TEMPÉRATURE

(30) Priority: 27.04.2011 GB 201106989
(43) Date of publication of application: 05.03.2014
(73) Proprietor: Cadbury UK Limited, Birmingham B30 2LU (GB)
(72) Inventor: DE LA HARPE, Shane Michael, Dunedin 9016 (NZ); DICKERSON, Stuart Thomas, Dunedin 9016 (NZ)
(74) Representative: Appleyard Lees IP LLP
(86) International application number: PCT/GB2012/050908
(87) International publication number: WO 2012/146921

(56) References cited:
- EP-A1- 1 733 625
- EP-A2- 0 997 076
- WO-A1-99/45788
- WO-A1-2008/007938
- WO-A2-2009/012929
- US-A- 3 218 174
- US-A- 5 709 903
- US-B1- 6 221 422

## Description

The present invention relates to processes for the manufacture of temperature tolerant chocolate comprising re-refining of a conched chocolate.

Development of a temperature tolerant chocolate (TTC) format represents a huge opportunity for the food and confectionery industry that has impact across a range of categories including chocolate, biscuit and snacks. Chocolate and biscuit-type snack products are sensitive to changes and extremes of temperatures such that their quality deteriorates dramatically unless conditions are well controlled. Production of temperature tolerant chocolate would allow production of chocolate-containing product more suitable for hot climates, particularly in less economically developed countries where the supply chain is ill-equipped to handle significant temperature / humidity fluctuations and where product quality is compromised.

WO2008/007938 relates to a prebiotic chocolate and method for producing the same. WO99/45788 relates to food products having enhanced cocoa polyphenol content and processes for producing the same. EP1733625 relates to a process for producing granular chocolate base materials for chocolate production and products thereof.

It is believed that less temperature tolerant chocolates tend to comprise a more fat continuous system where the sugar particles are coated in fat. We have found that it is possible to instil more favourable temperature tolerant properties into a conched chocolate by refining the conched chocolate after the conching step. Without being bound by theoretical considerations it is believed that this leads to shearing of sugar particles in the conched chocolate leading to exposed faces of the sugar particles, i.e. faces which are not coated in fat. Such exposed sugar particle faces contribute towards a more sugar continuous system (sugar matrix) reducing the percentage of fat coated sugar particles which is believed to be advantageous for temperature tolerant properties.

Thus, according to a first aspect of the invention there is provided a process for preparing a re-refined conched chocolate product
characterized in that the process comprises:
(a) providing unconched chocolate ingredients comprising one or more sweeteners, cocoa liquor and fat;
(b) roll refining said unconched chocolate ingredients,
(c) conching said unconched chocolate ingredients to form a conched chocolate;
(d) roll refining said conched chocolate to form a chocolate product; and optionally moulding said chocolate;
and further characterized in that after the final roll refining (step (d)) of the conched chocolate there is no further conching.

In a further embodiment of the invention there is provided a process for preparing a chocolate product comprising:
(a) providing unconched chocolate ingredients;
(b) refining said unconched chocolate ingredients,
(c) conching said unconched chocolate ingredients to form a conched chocolate; and
(d) refining said conched chocolate to form a chocolate product, and
optionally moulding said chocolate product.

In a further embodiment of the invention there is provided a process for preparing a chocolate product comprising:
(a) providing unconched chocolate ingredients;
(b) refining said unconched chocolate ingredients, and
(c) conching said unconched chocolate ingredients to form a conched chocolate;
(d) tempering said conched chocolate;
(e) refining said tempered, conched chocolate to form a chocolate product, and
(f) optionally, tempering said chocolate product, and
optionally moulding said chocolate product.

In a further embodiment of the invention there is provided a process for preparing a chocolate product comprising:
(a) providing unconched chocolate ingredients;
(b) refining said unconched chocolate ingredients,
(c) conching said unconched chocolate ingredients to form a conched chocolate;
(d) refining said tempered, conched chocolate to form a chocolate product, and
(e) tempering said chocolate product, and
optionally moulding said chocolate product.

The term 'chocolate ingredients' comprises fat and one or more components selected from milk, one or more sweeteners and cocoa liquor (otherwise known as cocoa mass). In one embodiment 'chocolate ingredients' comprises fat and one or more sweeteners and one or more components selected from milk and cocoa liquor (otherwise known as cocoa mass). In a further embodiment 'chocolate ingredients' comprises milk, one or more sweeteners, cocoa liquor and fat. In another embodiment 'chocolate ingredients comprises one or more sweeteners, cocoa liquor and fat. In a further embodiment 'chocolate ingredients' comprises milk, one or more sweeteners and fat. The term 'chocolate ingredients' further comprises chocolate ingredients where some or all of the cocoa liquor is replaced by cocoa powder.

Milk can be provided in any suitable form, such as liquid milk, condensed milk, evaporated milk or milk solids (powder or granules) such as whole milk powder, whey proteins or low fat milk solids or any mixture of these milk forms.

Suitable sweeteners include sugars (e.g. sucrose, dextrose, glucose syrup solids, fructose, lactose, maltose or any combination thereof), sugar alcohols (e.g. erythritol, sorbitol, xylitol, mannitol, lactitol, isomalt, or any combination thereof), intense sweeteners (e.g. aspartame, acesulfame-k, cyclamates, saccharin, sucralose, neohesperidin, dihydrochalone, alitame, stena sweeteners, glycyrrhizin or any combination thereof) and any combination of sugars, sugar alcohols and intense sweeteners. In one embodiment of the invention the sweetener comprises sucrose. In a further embodiment the sweetener is sucrose.

Sweeteners may be provided as a separate component in the chocolate ingredients and/or comprise part of one of the other ingredients, for example, lactose as a component of milk. In one embodiment of the invention the sweetener comprises sucrose and lactose as a constituent of the milk component. In a further embodiment the sweetener consists of sucrose and lactose as a constituent of the milk component.

Sugar can be provided in an amorphous or crystalline form or a mixture thereof. In some embodiments predominantly all the sugar is amorphous, in others predominantly all the sugar is crystalline. In other embodiments the sugar is a mixture of amorphous and crystalline sugar. For example, in one embodiment more than 50% of the sugar is amorphous, whilst in other embodiments less than 50% of the sugar is amorphous. In a further embodiment most of the sugar is crystalline, for example >90% crystalline.

In general less than 50% of the sugar is amorphous, for example, less than 45% such as less than 40%, less than 25%, less than 30%, less than 25%., less than 20%, less than 15% or less than 10%. The sugar may comprise one saccharides e.g. sucrose or a mixture of saccharides for example a mixture of sucrose and lactose. Where there is a mixture of saccharides each saccharide may have is own degree of crystallinity. For example, where the sugar is a mixture of sucrose and lactose, the sucrose may be predominantly crystalline (for example >95% crystalline) and the lactose predominantly crystalline (>95% crystalline) or the lactose predominantly amorphous (>95% amorphous).

The milk, one or more sweeteners and cocoa liquor and/or cocoa mass can be provided as a chocolate crumb. Chocolate crumb comprises milk to which is added one or more sweeteners and cocoa liquor, followed by drying. Chocolate crumb provides some of the chocolate ingredients as a convenient intermediate in chocolate making with an increased shelf life. Chocolate crumb would be familiar to the skilled man and a number of processes are available for it's manufacture. For example, sweetened condensed milk is mixed with cocoa liquor and dried to form crumb. The skilled man would be familiar with different types of crumb for example with different crystallinities and different fat contents. Such crumbs would be suitable as a source of chocolate ingredients for chocolate products of the invention. For further information a number of standard texts are available to the skilled man, for example, Chocolate, Cocoa and Confectionary, 3rd Edition, 1999, Author: Minifie, BW, Publisher: Aspen, Gaithersburg, Maryland, USA.

Suitable fats for use in the chocolate ingredient comprise cocoa butter, butterfat, a cocoa butter equivalent (CBE), a cocoa butter substitute (CBS) (sometimes known as a cocoa butter replacer, CBR), a vegetable fat that is liquid at standard ambient temperature and pressure (SATP, 25°C. and 100 kPa), a wholly non-metabolisable fat or any combination of the above. In one embodiment the fat is cocoa butter. In one embodiment the cocoa butter is derived from one source whilst in a further embodiment the cocoa butter is a blend of cocoa butters from a number of sources, so called 'butter blend'.

CBE's are, for example, as defined in European Directive 2000/36/EC as complying with the following criteria:
a) they are non-lauric vegetable fats, which are rich in symmetrical monounsaturated triglycerides of the type POP (dipalmitoyl-2-oleoyl glycerol), POSt (1-palmitoyl-2-oleoyl-3-palmitoyl-glycerol) and StOSt (distearoyl-2-oleoyl glycerol);
b) they are miscible in any proportion with cocoa butter, and are compatible with its physical properties (melting point and crystallisation temperature, melting rate, need for tempering phase);
c) they are obtained only by the processes of refining and/or fractionation, which excludes enzymatic modification of the triglyceride structure.

Suitable CBE's include illipe, Borneo tallow, tengkawang, palm oil, sal, shea, kokum gurgi and mango kernel. CBE's can be used in combination with cocoa butter. In one embodiment, the chocolate composition comprises no more than 5 wt % CBE's.

Suitable CBS's include CBS laurics and CBS non-laurics. CBS laurics are short-chain fatty acid glycerides. Their physical properties vary but they all have triglyceride configurations that make them compatible with cocoa butter. Suitable CBS's include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS non-laurics include soya, cotton seed, peanut, rape seed and corn (maize) oil.

The chocolate ingredients may comprise a cocoa butter equivalent (CBE) and/or a cocoa butter substitute (CBS) in place of some or all of the cocoa butter.

Suitable vegetable fats include corn oil, cotton seed oil, rape seed oil, palm oil, safflower oil, and sunflower oil. A liquid vegetable fat may be employed when a liquid chocolate composition is desired

Suitable partly or wholly non-metabolisable fats include Caprenin.

The term 'conched chocolate' refers to any mixture of chocolate ingredients whch has been subjected to conching. A chocolate product comprises a suspension of fine particles (generally in the range 0.5µM to 250µM , such as 0.5µM to 80µM, for example less than 30µM) coated in fat. The particles may comprise cocoa solids and sweetener and in the case of milk chocolate, milk solids. The methodology for the formulation of the conched chocolate comprises refining to reduce particle size and conching. Conching would be familiar to the skilled man (being generally a process in which solids are coated with fat, moisture content is lowered and volatile or unwanted flavours removed). A number of conching methods have been developed, for example using a longitudinal conche, a rotary conche, a Tourell Conche or a Macintyre refiner/conche. For more information the reader is referred to Chocolate, Cocoa and Confectionary, 3rd Edition, 1999, Author: Minifie, BW, Publisher: Aspen, Gaithersburg, Maryland, USA and The Science of Chocolate, 2nd Edition 2008. Author: Stephen T. Beckett.. Publisher: The Royal Society of Chemistry, Cambridge, UK. Examples of conched chocolate include any commercially available chocolate, for example Cadbury Dairy Milk™, Mars Galaxy™, Nestle Yorkie™, etc)

The term 'tempered' refers to a process which increases the stability of chocolate. Cocoa butter exists in a number of polymorphic forms. Presently six forms of cocoa butter have been identified, Forms I to VI. Forms I to IV are the less stable forms and therefore are less preferred as components of chocolate. Forms V and VI are the most stable forms. In the tempering process the cocoa butter is converted to the most stable forms, in general such that the cocoa butter is predominantly in the Forms V and/or IV. In some embodiments tempering results in the cocoa butter being predominantly in Form V. In general, tempering is performed by a cyclical heating and cooling process resulting in a progressive increase in the more stable forms of cocoa butter.

The chocolate ingredients can be provided in any suitable form for mixing with the conched chocolate. For example:
(a) chocolate crumb, pasted with fat;
(b) milk, one or more sweeteners and cocoa liquor or cocoa powder pasted with fat;
(c) one or more sweeteners and cocoa liquor or cocoa powder pasted with fat;
(d) milk and one or more sweeteners pasted with fat;
(e) milk powder or granules, one or more sweeteners and cocoa liquor or cocoa powder, pasted with fat;
(f) milk powder or granules and one or more sweeteners pasted with fat;
(g) sweetened condensed milk and cocoa liquor or cocoa powder, pasted with fat;
(h) sweetened condensed milk pasted with fat; or
(i) chocolate crumb and powdered milk, sugar and cocoa liquor and/or cocoa powder pasted with fat.

There may be provided a process for preparing a chocolate product, comprising:
(a) preparing an unconched paste by a process comprising the steps of:
   (i) providing starting ingredients, for example chocolate crumb;
   (ii) pasting said starting ingredients with a fat to form an unconched paste;
(b) refining said unconched paste;
(c) conching said unconched paste to form a conched chocolate;
(d) refining said conched chocolate to form a chocolate product; and
optionally moulding said chocolate product.

There may be provided a process for preparing a chocolate product, comprising:
(a) preparing an unconched paste by a process comprising the steps of:
   (i) providing starting ingredients, for example chocolate crumb;
   (ii) pasting said starting ingredients with a fat to form an unconched paste;
(b) refining said unconched paste;
(c) conching said unconched paste to form a conched chocolate;
(d) tempering said conched chocolate;
(e) refining said tempered, conched chocolate to form a chocolate product;
(f) optionally tempering said chocolate product, and
optionally moulding said chocolate product.

There may be provided a process for preparing a chocolate product, comprising:
(a) preparing an unconched paste by a process comprising the steps of:
   (i) providing starting ingredients, for example chocolate crumb;
   (ii) pasting said starting ingredients with a fat to form an unconched paste;
(b) refining said unconched paste;
(c) conching said unconched paste to form a conched chocolate;
(d) refining said tempered, conched chocolate to form a chocolate product;
(e) tempering said chocolate product, and
optionally moulding said chocolate product.

The term 'starting ingredients' refers to chocolate ingredients without the added fat. For example, starting ingredients include:
(i) chocolate crumb;
(ii) cocoa liquor or cocoa powder, milk and one or more sweeteners
(iii) cocoa liquor or cocoa powder, milk powder or granules and one or more sweeteners;
(iv) milk and one or more sweeteners;
(v) sweetened condensed milk;
(vi) milk powder or granules and one or more sweeteners; or
(vii) cocoa liquor or cocoa powder and one or more sweeteners;

In some embodiments a refining step is not conducted prior to the conching step but is included after the conching step. Therefore, according to a further aspect of the invention there is provided a process for preparing a chocolate product comprising:
(a) providing unconched chocolate ingredients;
(b) conching said chocolate ingredients to form a conched chocolate;
(c) refining said conched chocolate, and
optionally moulding said chocolate product.

There may be provided a process for preparing a chocolate product comprising:
(a) providing unconched chocolate ingredients;
(b) conching said chocolate ingredients to form a conched chocolate;
(c) tempering said conched chocolate;
(d) refining said tempered, conched chocolate to form a chocolate product,
(e) optionally tempering said chocolate product, and
optionally moulding said chocolate product.

There may be provided a process for preparing a chocolate product comprising:
(a) providing unconched chocolate ingredients;
(b) conching said chocolate ingredients to form a conched chocolate;
(c) refining said tempered, conched chocolate to form a chocolate product,
(d) tempering said chocolate product, and
optionally moulding said chocolate product.

According to a further embodiment of the invention there is provided a process for preparing a chocolate product, comprising:
(a) preparing an unconched paste by a process comprising the steps of:
   (i) providing starting ingredients, for example chocolate crumb;
   (ii) pasting said starting ingredients with a fat to form an unconched paste;
(b) conching said unconched paste to form conched chocolate,
(c) refining said conched chocolate to form a chocolate product, and
optionally moulding said chocolate product.

According to a further embodiment of the invention there is provided a process for preparing a chocolate product, comprising:
(a) preparing an unconched paste by a process comprising the steps of:
   (i) providing starting ingredients, for example chocolate crumb;
   (ii) pasting said starting ingredients with a fat to form a paste;
(b) conching said unconched paste to form conched chocolate,
(c) tempering said conched chocolate;
(d) refining said tempered, conched chocolate to form a chocolate product,
(e) optionally tempering said chocolate product, and
optionally moulding said chocolate product.

According to a further embodiment of the invention there is provided a process for preparing a chocolate product, comprising:
(a) preparing an unconched paste by a process comprising the steps of:
   (i) providing starting ingredients, for example chocolate crumb;
   (ii) pasting said starting ingredients with a fat to form a paste;
(b) conching said unconched paste to form conched chocolate,
(c) refining said tempered, conched chocolate to form a chocolate product,
(d) tempering said chocolate product, and
optionally moulding said chocolate product.

In some embodiments the chocolate ingredients are provided in a refined state and a further refining step is added after the conching step. Therefore, according to a further aspect of the invention there is provided a process for preparing a chocolate product comprising:
(a) providing unconched chocolate ingredients wherein one of more of the chocolate ingredients are refined;
(b) conching the unconched chocolate ingredients to form conched chocolate;
(c) refining said conched chocolate to form a chocolate product, and
optionally moulding said chocolate product.

There may be provided a process for preparing a chocolate product comprising:
(a) providing unconched chocolate ingredients wherein one of more of the chocolate ingredients are refined;
(b) conching the unconched chocolate ingredients to form conched chocolate;
(c) tempering said conched chocolate;
(d) refining said tempered, conched chocolate to form a chocolate product,
(e) optionally tempering said chocolate product, and
optionally moulding said chocolate product.

There may be provided a process for preparing a chocolate product comprising:
(a) providing unconched chocolate ingredients wherein one of more of the chocolate ingredients are refined;
(b) conching the unconched chocolate ingredients to form conched chocolate;
(c) refining said tempered, conched chocolate to form a chocolate product,
(d) tempering said chocolate product, and
optionally moulding said chocolate product.

There may be provided a process for preparing a chocolate product comprising:
(a) providing unconched chocolate ingredients wherein the chocolate ingredients have an average particle size of less than 80µM;
(b) conching said unconched chocolate ingredient to form conched chocolate;
(c) refining said conched chocolate to form a chocolate product, and
optionally moulding said chocolate product.

There may be provided a process for preparing a chocolate product, comprising:
(a) preparing an unconched paste by a process comprising the steps of:
   (i) providing starting ingredients, for example chocolate crumb;
   (ii) pasting said starting ingredients with a fat to form a paste;
   (iii) refining said paste, for example to a particle size of less than about 80µM;
(b) conching said unconched paste to form conched chocolate;
(c) refining said conched chocolate to form a chocolate product, and
optionally moulding said chocolate product.

There may be provided a process for preparing a chocolate product comprising:
(a) providing unconched chocolate ingredients wherein the chocolate ingredients have an average particle size of less than 80µM;
(b) conching said unconched chocolate ingredient to form conched chocolate;
(c) tempering said conched chocolate;
(d) refining said tempered, conched chocolate to form a chocolate product,
(e) optionally tempering said chocolate product, and
optionally moulding said chocolate product.

There may be provided a process for preparing a chocolate product comprising:
(a) providing unconched chocolate ingredients wherein the chocolate ingredients have an average particle size of less than 80µM;
(b) conching said unconched chocolate ingredient to form conched chocolate;
(c) refining said tempered, conched chocolate to form a chocolate product,
(d) tempering said chocolate product, and
optionally moulding said chocolate product.

There may be provided a process for preparing a chocolate product comprising:
(a) providing unconched chocolate ingredients wherein the chocolate ingredients have an average particle size of less than 80µM;
(b) conching said unconched chocolate ingredients to form conched chocolate;
(c) tempering said conched chocolate;
(d) refining said tempered, conched chocolate to form a chocolate product,
(e) optionally tempering said chocolate product, and
optionally moulding said chocolate product.

There may be provided a process for preparing a chocolate product comprising:
(a) providing unconched chocolate ingredients wherein the chocolate ingredients have an average particle size of less than 80µM;
(b) conching said unconched chocolate ingredients to form conched chocolate;
(c) refining said tempered, conched chocolate to form a chocolate product,
(d) tempering said chocolate product, and
optionally moulding said chocolate product.

There may be provided a process for preparing a chocolate product, comprising:
(a) preparing an unconched paste by a process comprising the steps of:
   (i) providing starting ingredients, for example chocolate crumb;
   (ii) pasting said starting ingredients with a fat to form a paste;
   (iii) refining said paste, for example to a particle size of less than about 80µM;
(b) conching said unconched paste to form conched chocolate;
(c) tempering said conched chocolate;
(d) refining said tempered, conched chocolate to form a chocolate product,
(e) optionally tempering said chocolate product, and
optionally moulding said chocolate product.

There may be provided a process for preparing a chocolate product, comprising:
(a) preparing an unconched paste by a process comprising the steps of:
   (i) providing starting ingredients, for example chocolate crumb;
   (ii) pasting said starting ingredients with a fat to form a paste;
   (iii) refining said paste, for example to a particle size of less than about 80µM;
(b) conching said unconched paste to form conched chocolate;
(c) refining said tempered, conched chocolate to form a chocolate product,
(d) tempering said chocolate product, and
optionally moulding said chocolate product.

The term 'refining', and derivatives thereof, such as refined, refers to the process of reduction in the particle size of chocolate ingredients. A number of processes are available for refining to reduce particle size, for example roll refining.

During refining of the conched chocolate a reduction in particle size was observed. In some embodiment this was in the range about 10-50%, for example about 10%, about 20%, about 30%, about 40% or about 50%. In other embodiments the reduction in particle size of the conched chocolate could be as much as about 80%, for example about 60%, about 70% or about 80%,

In some embodiments an emulsifier is added during the process, for example when mixing the starting ingredients with fat to form an unconched paste. In some embodiments no emulsifier is added.

In one embodiment the emulsifier content is less than 1% (w/w), for example less than about 0.8% (w/w) such as less than about 0.7%, about 0.6%, about 0.5%, about 04%, about 0.3%, about 0.2% or about 0.1% (w/w). In one embodiment the chocolate product contain no emulsifier or a minimal level such as less than about 0.05% emulsifier.

Suitable emulsifiers include lecithin derived from soya bean, safflower, sunflower, corn etc., fractionated lecithins enriched with either phosphatidyl choline, phosphatidyl ethanolamine, phosphatidyl inositol; emulsifiers derived from oats, mono- and diglycerides and their tartaric esters, monosodium phosphate derivatives of mono- and diglycerides of edible fats and oils, sorbitan monostearate, polyoxyethylene sorbitan monostearate, hydroxylated lecithin, synthetic phospholipids such as ammonium phosphatides, polyglycerol polyricinoleate (PGPR), lactylated fatty acid esters of glycerol and propylene glycol, polyglycerol esters of fatty acids, citric acid esters of fatty acids, propylene glycol mono- and diesters of fats and fatty acids. In one embodiment the emulsifier is soya lecithin, for example soya lecithin SN100. In a further embodiment the emulsifier comprises a mixture of soya lecithin and polyglycerolpolyricinoleate. (PGPR).

In processes of the invention, in general, there is no further conching step after the final refining of the conched chocolate. In a further embodiment of the invention there is provided a process of the invention wherein after the final refining of the conched chocolate there is no further conching. For the avoidance of doubt conching before the final refining step can be conducted as one operation or conching may occur in a number of separate operations prior to the final refining step, for example, in one, two or three separate operations.

In some embodiments of the invention a gas, for example air, is conducted through the chocolate during one of more of the conching steps. In a further embodiment gas is not conducted through the chocolate during one of more of the conching steps.

The process according to the invention provides a chocolate product comprising a re-refined conched chocolate, wherein the fat content is in the range 25 to 35% (w/w), the average particle size is less than 80µm, and wherein the chocolate product has a hardness at 40°C of greater than 200g when measured using a texture tolerance method.

The chocolate product provided by the process of the invention may further comprise an emulsifier.

The term 'about' when used in this specification refers to a tolerance ±2%, of the stated value, i.e. about 47% encompasses any value in the range 45% to 49%. In further embodiments 'about' refers to a tolerance of ±1%,, ±0.5%, ±0.2% or 0.1% of the stated value

Temperature tolerance of chocolate can be measured by measuring the hardness at an elevated temperature, for example using a TA.XTPlus Texture Analyzer using a 12.8mm cylindrical probe programmed to penetrate the sample to a depth of 3mm at a speed of 0.5mm/second (Stable Micro Systems Ltd., Godalming, Surrey, UK.) after incubating the chocolate product at 40°C for 3 hours prior to analysis. In this assay non-temperature tolerant chocolate would have a hardness of approximately 25-50g. In this assay, temperature tolerant chocolate products of the invention have a hardness of at least 200g. In other embodiments, in this assay temperature tolerant chocolate products of the invention have a hardness of at least 500g, at least 750g, at least 1000g, at least 1250g, at least 1500g, at least 1750g, at least 2000g, at least 2250g or at least 2500g.

The percentage of fat in the chocolate product was found to affect the temperature tolerance of the chocolate product. Therefore, in one embodiment the percentage fat in the chocolate product is less than about 35% , for example in the range about 20% to about 35%, In an alternative embodiment in the range about 25% to about 35%, about 28% to about 33% or about 29% to about 32%, or about 20% to about 25%. The total fat is a combination of the fat derived from milk, where present and the fat derived from the cocoa butter. In one embodiment the percentage of fat derived from the milk is about 0% to about 8%, for example, about 4% to about 7%, such as about 4.5% to 6.5%. In one embodiment the percentage fat derived from the cocoa butter is less that about 30%, for example in the range about 15% to about 30%, such as about 20% to about 30%. In a further embodiment the total fat in the chocolate product is at least 18%, for example at least 20% or at least 22% (w/w).

Chocolate products Provided by the process of the invention may have different average particle sizes. Therefore, in one embodiment the average particle size is no more than 80µm, 75µm, 70µm or 65µm. In some embodiments, the average particle size is at least 20µm, 25µm or 30µm. In some embodiments, the average particle size is in the range 15 to 65µm. In a further embodiment there average particle size is in the range 15 to 50µm, for example 20 to 50µm, 20 to to 45µm, 20 to 40µm or 20 to 40µm.

Particle size can also be expressed as D84 or D90 values. D84 relates to the maximum particle size of 84% of the particles and D90 relates to the maximum particle size of 90% of the particles.

In general lower fat contents and lower particle sizes gave best temperature tolerance. However, it was also found that the effects of particle size and percentage fat on the temperature tolerance are related such that a higher particle size in combination with a lower fat content gave a good temperature tolerance and a lower particle size in combination with a higher fat content gave a good temperature tolerance

The invention is now exemplified with reference to the following non-limiting examples wherein:

### Example 1

### Preparation of Temperature Tolerant Chocolate

Any chocolate that can be re-melted such that it can be delivered to a refiner (or other appropriate mill) to be refined is suitable as a staring material for chocolate products of the invention. The chocolate must be cooled sufficiently such that its viscosity is sufficiently high to enable the refiner to capture the product with sufficient friction/grip to transfer through the rolls. Once in the rolls the refiner must be adjusted using temperature and gap settings to maintain the chocolate in a semi solid state and reduce the particle size. As a result of this the chocolate changes to a chocolate with a crumbly semi-dry texture. This material when tested had characteristic temperature tolerant properties.

### Materials

Chocolate - untempered milk chocolate containing 27.5% total fat, 0.38% soy lecithin and 0.3% polyglycerol polyrininoleate.
Refiner -Bühler SDX-600 3-Roll Refiner (Bühler AG, Uzwil, Switzerland)
Conche - Frisse Double overthrow conche - Laboratory version DUC 006

### Procedure

The chocolate was fully melted by storing in a hot room at 45°C. Chocolate was then allowed to cool to 30°C at which point it reverts to a semi solid state. Semi solid chocolate paste was transferred to the SDX-600 3 roll refiner which was set up as follows.
Roll 1 Temperature - 20°C (Room Temperature)
Roll 2 Temperature - 20°C (Room Temperature)
Roll 3 Temperature - 20°C (Room Temperature)
Roll 1-2 Gap (Left side) - 12:00 (Zero Setting at 40°C)
Roll 1-2 Gap (Right side) - 12:00 (Zero Setting at 40°C)
Roll 2-3 Gap (Left side) - 12:00 (Zero Setting at 40°C)
Roll 2-3 Gap (Left side) - 12:00 (Zero Setting at 40°C)
Roll 1-2 Pressure - 20 bar
Roll 2-3 Pressure - 20 bar
Knife Pressure - 9 bar

5.1kg of chocolate was refined over a 30 minute period with the output resembling a semi-dry paste-like sheet which folded in on itself into a layered bar. The bars were stored for 60 minutes at 13°C and allowed to harden prior to testing.

### Measurement of Temperature Tolerance

Temperature tolerance of chocolate was measured using the hardness at an elevated temperature. This was measured using a TA.XTPlus Texture Analyzer using a 12.8mm cylindrical probe programmed to penetrate the sample to a depth of 3mm at a speed of 0.5mm/second (Stable Micro Systems Ltd., Godalming, Surrey, UK.) after incubating the chocolate product at 40°C for 3 hours prior to analysis

### Results

The temperature tolerant chocolate product samples were incubated at 40°C for 3 hours. A commercially available milk chocolate, Cadbury's Diary Milk (RTM) was used as control.

The temperature tolerant chocolate product did not melt after 3h at 40°C.. If pressed with a finger, it does not stick nor has the consistency of a molten product, however, it could be broken by applying some load. It had the mouth-feel more similar to standard chocolate than unconched paste samples.

## Claims

1. A process for preparing a re-refined conched chocolate product **characterized in that** the process comprises:
(a) providing unconched chocolate ingredients comprising one or more sweeteners, cocoa liquor and fat;
(b) roll refining said unconched chocolate ingredients,
(c) conching said unconched chocolate ingredients to form a conched chocolate;
(d) roll refining said conched chocolate to form a chocolate product; and
optionally moulding said chocolate;
and further **characterized in that** after the final roll refining (step (d)) of the conched chocolate there is no further conching.

2. A process according to Claim 1 comprising:
(a) preparing an unconched paste by a process comprising the steps of:
(i) providing starting ingredients;
(ii) pasting said starting ingredients to form an unconched paste;
(b) roll refining said unconched paste;
(c) conching said unconched paste to form a conched chocolate,
(d) roll refining said conched chocolate to form a chocolate product; and
optionally moulding said chocolate product.

3. A process according to any preceding claim, wherein the process comprises moulding said chocolate product.

4. A process according to any of the preceding claims wherein the starting ingredients comprise chocolate crumb.

5. A process according to any one of claims 1 to 4 wherein less than 50% (w/w) of the sugar is in the amorphous form.

6. A process according to claim 6 wherein the sugar comprises a mixture of sucrose and lactose wherein the sucrose is predominantly crystalline and the lactose is predominantly amorphous.

7. A process according to claim 6 or 7 wherein the sugar comprises predominantly crystalline sucrose.

8. A process according to any one of the preceding claims wherein the conched chocolate is tempered.

9. A process according to any one of the preceding claims wherein the fat is selected from cocoa butter, butterfat, a cocoa butter equivalent, a cocoa butter substitute, a vegetable fat, a wholly non-metabolisable fat or any combination thereof.

10. A process according to any one of the preceding claims wherein the fat content of the chocolate product is at least 22%.

11. A process according to claim 10 wherein the fat content of the chocolate product is in the range 25% to 35%.

12. A process according to any preceding claim, wherein the average particle size of the chocolate product is less than 80µm.

13. A process according to any preceding claim, wherein the chocolate product has a hardness at 40°C of greater than 200g when measured using a texture tolerance method.

14. A process according to any preceding claim, wherein the chocolate product has a hardness at 40°C of greater than 1000g when measured using a texture tolerance method.

## Patentansprüche

1. Verfahren zur Herstellung eines wiederraffinierten conchierten Schokoladeprodukts, **dadurch gekennzeichnet, dass** das Verfahren umfasst:
(a) Bereitstellen von unconchierten Schokoladezutaten, umfassend einen oder mehrere Süßstoffe, Kakaoflüssigkeit und Fett;
(b) Walzenraffinieren der unconchierten Schokoladezutaten;
(c) Conchieren der unconchierten Schokoladezutaten, um eine conchierte Schokolade zu bilden;
(d) Walzenraffinieren der conchierten Schokolade, um ein Schokoladeprodukt zu bilden; und
gegebenenfalls Formen der Schokolade;
und ferner **dadurch gekennzeichnet, dass** nach dem letzten Walzenraffinieren (Schritt (d)) der conchierten Schokolade kein weiteres Conchieren stattfindet.

2. Verfahren gemäß Anspruch 1, umfassend:
(a) Herstellen einer unconchierten Paste durch ein Verfahren umfassend die Schritte:
(i) Bereitstellen von Ausgangszutaten;
(ii) Verpasten der Ausgangszutaten, um eine unconchierte Paste zu bilden;
(b) Walzenraffinieren der unconchierten Paste;
(c) Conchieren der unconchierten Paste, um eine conchierte Schokolade zu bilden;
(d) Walzenraffinieren der conchierten Schokolade, um ein Schokoladeprodukt zu bilden; und
gegebenenfalls Formen des Schokoladeprodukts.

3. Verfahren gemäß einem der vorstehenden Ansprüche, wobei das Verfahren Formen des Schokoladeprodukts umfasst.

4. Verfahren gemäß einem der vorstehenden Ansprüche, wobei die Ausgangszutaten Schokoladekrümel umfassen.

5. Verfahren gemäß einem der Ansprüche 1 bis 4, wobei weniger als 50 % (Gew./Gew.) des Zuckers in amorpher Form vorliegen.

6. Verfahren gemäß Anspruch 6, wobei der Zucker ein Gemisch von Saccharose und Lactose umfasst, wobei die Saccharose vorwiegend kristallin ist und die Lactose vorwiegend amorph ist.

7. Verfahren gemäß Anspruch 6 oder 7, wobei der Zucker vorwiegend kristalline Saccharose umfasst.

8. Verfahren gemäß einem der vorstehenden Ansprüche, wobei die conchierte Schokolade temperiert wird.

9. Verfahren gemäß einem der vorstehenden Ansprüche, wobei das Fett ausgewählt ist aus Kakaobutter, Butterfett, einem Kakaobutter-Äquivalent, einem Kakaobutter-Ersatz, einem Pflanzenfett, einem vollständig nichtmetabolisierbaren Fett und einer beliebigen Kombination davon.

10. Verfahren gemäß einem der vorstehenden Ansprüche, wobei der Fettgehalt des Schokoladeprodukts wenigstens 22 % beträgt.

11. Verfahren gemäß Anspruch 10, wobei der Fettgehalt des Schokoladeprodukts in dem Bereich von 25 % bis 35 % liegt.

12. Verfahren gemäß einem der vorstehenden Ansprüche, wobei die mittlere Partikelgröße des Schokoladeprodukts kleiner als 80 µm ist.

13. Verfahren gemäß einem der vorstehenden Ansprüche, wobei das Schokoladeprodukt eine Härte bei 40 °C, wenn unter Verwendung eines Textur-Toleranzverfahrens gemessen, von größer als 200 g aufweist.

14. Verfahren gemäß einem der vorstehenden Ansprüche, wobei das Schokoladeprodukt eine Härte bei 40 °C, wenn unter Verwendung eines Textur-Toleranzverfahrens gemessen, von größer als 1000 g aufweist.

## Revendications

1. Procédé de préparation d'un produit de chocolat conché reraffiné, **caractérisé en ce que** le procédé comprend :
(a) la fourniture d'ingrédients de chocolat non conché comprenant un ou plusieurs édulcorants, de la liqueur de cacao et des matières grasses ;
(b) le raffinage par rouleaux desdits ingrédients de chocolat non conché ;
(c) le conchage desdits ingrédients de chocolat non conché afin de former un chocolat conché ;
(d) le raffinage par rouleaux dudit chocolat conché afin de former un produit de chocolat ; et
éventuellement le moulage dudit chocolat ;
et **caractérisé en outre en ce que**, après le raffinage par rouleaux final (étape (d)) du chocolat conché, il n'y ait plus aucun conchage.

2. Procédé selon la revendication 1, comprenant :
(a) la préparation d'une pâte non conchée par un procédé comprenant les étapes :
(i) de fourniture d'ingrédients de départ ;
(ii) de mise en pâte desdits ingrédients de départ afin de former une pâte non conchée ;
(b) le raffinage par rouleaux de ladite pâte non conchée ;
(c) le conchage de ladite pâte non conchée afin de former un chocolat conché ;
(d) le raffinage par rouleaux dudit chocolat conché afin de former un produit de chocolat ; et
éventuellement le moulage dudit produit de chocolat.

3. Procédé selon l'une quelconque des revendications précédentes, **caractérisé en ce que** le procédé comprend le moulage dudit produit de chocolat.

4. Procédé selon l'une quelconque des revendications précédentes, **caractérisé en ce que** les ingrédients de départ comprennent des miettes de chocolat.

5. Procédé selon l'une quelconque des revendications 1 à 4, **caractérisé en ce que** moins de 50% (p/p) du sucre se trouve sous forme amorphe.

6. Procédé selon la revendication 6, **caractérisé en ce que** le sucre comprend un mélange de saccharose et de lactose, où le saccharose est principalement cristallin et le lactose est principalement amorphe.

7. Procédé selon la revendication 6 ou 7, **caractérisé en ce que** le sucre comprend principalement du saccharose cristallin.

8. Procédé selon l'une quelconque des revendications précédentes, **caractérisé en ce que** le chocolat conché est tempéré.

9. Procédé selon l'une quelconque des revendications précédentes, **caractérisé en ce que** les matières grasses sont choisies parmi le beurre de cacao, la matière grasse du beurre, un équivalent de beurre de cacao, un succédané de beurre de cacao, une matière grasse végétale, une matière grasse entièrement non métabolisable, ou une combinaison quelconque de ceux-ci.

10. Procédé selon l'une quelconque des revendications précédentes, **caractérisé en ce que** la teneur en matière grasse du produit de chocolat est d'au moins 22%.

11. Procédé selon la revendication 10, **caractérisé en ce que** la teneur en matière grasse du produit de chocolat se trouve dans la plage allant de 25% à 35%.

12. Procédé selon l'une quelconque des revendications précédentes, **caractérisé en ce que** la taille moyenne de particule du produit de chocolat est inférieure à 80 µm.

13. Procédé selon l'une quelconque des revendications précédentes, **caractérisé en ce que** le produit de chocolat possède une dureté à 40°C supérieure à 200 g, lors d'une mesure à l'aide d'une méthode de tolérance de texture.

14. Procédé selon l'une quelconque des revendications précédentes, **caractérisé en ce que** le produit de chocolat possède une dureté à 40°C supérieure à 1000 g, lors d'une mesure à l'aide d'une méthode de tolérance de texture.
